Europäisches Patentamt

(19) **European Patent Office**

**Office européen des brevets**

(11) Veröffentlichungsnummer: **0 186 772**
**A1**

(12) **EUROPÄISCHE PATENTANMELDUNG**

(21) Anmeldenummer: **85114808.0**

(22) Anmeldetag: **21.11.85**

(51) Int. Cl.⁴: **B 65 G 17/36, B 65 G 17/12**

(30) Priorität: **22.12.84 DE 3447218**

(43) Veröffentlichungstag der Anmeldung: **09.07.86**
Patentblatt 86/28

(84) Benannte Vertragsstaaten: **DE FR GB IT NL**

(71) Anmelder: **Klöckner-Humboldt-Deutz Aktiengesellschaft, Deutz-Mülheimer-Strasse 111 Postfach 80 05 09, D-5000 Köln 80 (DE)**

(72) Erfinder: **Riechelmann, Gundo, Dr., Am Susewind 8, D-4322 Sprakhövel 2 (DE)**
Erfinder: **Stenzel, Manfred, Meraner Weg 10, D-4650 Gelsenkirchen (DE)**

(74) Vertreter: **Beisner, Klaus, Dipl.-Ing. et al, c/o KHD Humboldt Wedag AG Patente und Lizenzen Wiersbergstrasse Postfach 91 04 57, D-5000 Köln 91 (DE)**

(54) **Rohrbecherwerk.**

(57)  Eine korbbogenbodenartige Ausbildung der Becher (7, 8, 9, 16, 24) an Steilförderern ergibt nach vorn und zur Seite einen Freischnittwinkel, so daß ein solcher Becherförderer Gut (13) selbsttätig von allen Seiten aufnehmen kann, ohne daß das Aufnahmesystem um die vertikale Achse gedreht werden muß. Eine solche schaufelradähnliche Gutaufnahme erfordert eine seitliche Führung der Zugträger (10) in der betreffenden Umlenkung, was neben einer Buchsenförderkette (20) auch von einer Gummikette (22) mit einvulkanisierten Befestigungselementen (25) und Stahlseilen (23), einem Becherwerksgurt (27) mit Längsprofilen (28) oder einem kantenverstärkten Wellkantengurt (32) erfüllt wird. Bei letzterem werden die «Becher» durch Stollen (33) mit kegelig gekröpften Blechschneiden (34) gebildet. Gewöhnlich ist der Steilförderer von einem Rohr (4) umgeben, das die Vorrichtung trägt und als Schutz dient. Durch die vorteilhafte Becherform ist die optimale Nutzung des Rohrquerschnitts möglich.

Anlage zum Patentgesuch der    - 1 -    K H D
Klöckner-Humboldt-Deutz          H 84/68
Aktiengesellschaft

vom 21. Dezember 1984


<u>Rohrbecherwerk</u>


Die Erfindung richtet sich auf einen Stetigentlader, enthaltend als Steilförderer Becher an einen Zugträger.

Bei Massengütern erweisen sich Stetigentlader gegenüber unstetigen Entladeeinrichtungen als wirtschaftlicher. Es treten jedoch häufig Probleme bei der Gutaufnahme, beim Zuführen und/oder Losbrechen und/oder bei der Restmengenentleerung auf. Bekannte Stetigentlader bestehen im wesentlichen aus einem Aufnahmesystem, einem Senkrecht- bzw. Steilfördersystem und Übergabeeinrichtungen auf Bänder, wobei alle diese Elemente gemeinsam mit Hilfe eines Kranes geschwenkt, verschoben und gehoben werden können. Das Aufnahmesystem soll das Fördergut selbsttätig aufnehmen können. Eine Senkrecht- oder Steilförderung kann mittels Formschluß, Kraftschluß oder durch Strömungs- und Auftriebskräfte erfolgen. Bekannte

0186772
H 84/68

Senkrechtförderer mittels Formschluß sind Becherwerk, Gurttaschenförderer und Schaufelrad. Wegen der geringen Förderhöhe scheiden Schaufelräder als alleinige Senkrechtförderer aus Platzgründen im allgemeinen aus.

Ein mit einem Becherwerk ausgestatteter Senkrechtförderer kann das Fördergut direkt aufnehmen. Die Becher bekannter Förderer sind nährungsweise kastenförmig ausgebildet, wobei die vordere Längskante schräg verläuft. Damit wird beim streifenförmigen Verfahren des Becherwerks das Gut längs des Streifens in der Breite des Bechers problemlos aufgenommen, aber nicht von der Seite. Um auch Gut neben dem Streifen aufnehmen zu können, wird nach dem Stand der Technik bei den meisten Stetigentladern der Senkrechtförderer um seine Vertikale geschwenkt. Wegen dieser zusätzlichen Beweglichkeit ist auch eine spezielle Ausbildung der Übergabe des Gutes vom Senkrechtförderer zum nährungsweise horizontal weiterfördernden Band erforderlich.

Aufgabe der Erfindung ist es, einen schöpfenden Stetigförderer mit einem Becherwerk so weiterzubilden, daß die Drehbarkeit des Senkrechtförderers um seine Achse entfallen kann. Diese Möglichkeit soll nicht erkauft werden durch eine Verminderung der Leistung oder einen Mehraufwand beim Antrieb oder der konstruktiven Ausbildung. Da der Steilförderer gewöhnlich von einem Rohr umschlossen ist, soll die Becherform auf eine möglichst hohe Ausnutzung des Rohrquerschnittes abgestimmt sein.

Die Aufgabe wird von einem Stetigentlader erfüllt, der dadurch gekennzeichnet ist, daß die Becher korbbogenbodenartig ausgebildet sind, wodurch sie gleichzeitig neben einem vorderen auch einen seitlichen Freischnitt

0186772
K H D
H 84/68

winkel haben und der Zugträger seitliche Kräfte aufnehmen kann.

Mit der erfindungsgemäßen Vorrichtung wird erreicht, daß Gut von allen Seiten aufgenommen werden kann, weil auch seitlich ein Freischnittwinkel vorhanden ist. Der Abtrag einer Halde oder das Löschen eines Binnenschiffes ist im Schwenk- oder Sichelschnitt möglich, ohne daß der Senkrechtförderer um seine Achse gedreht werden muß. Die Zugträger müssen bei diesen Becherformen beim Aufnehmen des Gutes im Bereich der Umlenkung seitliche Kräfte übertragen. Von Vorteil bei dieser Aufnahmeart ist der mögliche Verzicht auf eine um die Vertikale drehbare Übergabeeinrichtung vom Senkrechtförderer zum Auslegerförderer oder eine Verwindung des Senkrechtförderers.

Unter dem Oberbegriff "korbbogenbodenartig" sind mehr oder weniger abgerundete napfartige Gebilde zusammengefaßt. Es sind dafür Teile von an sich bekannten, zum Teil genormten Formen wie Klöpperboden, hoher oder flacher Korbbogenboden, Halbkugelboden, normal- oder flachgewölbter Boden, flacher Boden, Tellerboden, gewölbte Scheibe oder Mischformen einsetzbar. Entscheidend ist ein Freischnittwinkel nach allen Seiten.

Auf eine stetige Krümmung kommt es dabei gar nicht an. Die Becher können auch aus zusammengefügten Blechen aufgebaut sein, wenn dadurch die oben definierte Korbbogenbodenähnlichkeit gewahrt ist. Auch durch Guß lassen sich Becher der gewünschten Form herstellen.

Gemäß einer Weiterbildung der Erfindung soll der Becher in Aufsicht kreisabschnittähnlich sein. Diese Becherform erlaubt eine optimale Raumausnutzung, wenn das Becherwerk verkleidet ist und dafür Rohre verwendet

0186772
H 84/68

werden. In der Regel ist das Rohr gleichzeitig tragendes Element und Verkleidung. Bei der zylindrischen Verkleidung läßt sich auch am einfachsten die Innenseite mit Gummi oder Kunststoff beschichten, wenn dies wegen des aggressiven Schüttguts erforderlich sein sollte. Es versteht sich, daß sich mit genormten Rohren eine besonders einfache Anpassung an verschiedene Förderhöhen und Einsatzfälle erzielen läßt.

Nach einer besonderen Ausführungsform der Erfindung ist der Becher in Vorderansicht kreisabschnittähnlich. Aufgrund dieses Merkmals ist auch seitlich ein Freischnittwinkel vorhanden. Diese Form kommt dem Schöpfen in einer rotierenden Halbkugel besonders nahe.

Da bei der Aufnahme des Gutes auch von der Seite her Kräfte auf diesen Becher wirken, müssen vom Zugträger solche seitliche Kräfte aufgenommen und übertragen werden können. Neben einer Kette mit Stahlgliedern sind gemäß der Erfindung Gummiketten mit einvulkanisierten Befestigungselementen und Stahlseilen bevorzugt. Der Zugträger kann hierbei die seitlichen Kräfte auf die Bordscheiben von Einzelrädern oder einer Trommel übertragen. Gegenüber einer Stahlkette ist der Geräuschpegel erheblich niedriger und die Laufruhe erheblich höher. Durch die Anpassung der Strangzahl an die Belastung ist eine hohe Flexibilität gegeben.

Nach einer Weiterbildung der Erfindung ist als Zugträger ein Becherwerksgurt mit Längsprofilen geeignet. Auch hier ist die Übertragung von Seitenkräften durch Nuten in der Umlenktrommel möglich und der Geräuschpegel gegenüber einer Stahlkette erheblich reduziert. Außerdem ist die für Gurtbecherwerke genormte Becherbefestigung einsetzbar.

0186772
K H D
H 84/68

Nach einer Weiterbildung der Erfindung ist als Zugträger ein Wellkantengurt mit Stollen und daran befestigten kegelig gekröpften Blechschneiden besonders geeignet. Die Übertragung der seitlichen Kräfte erfolgt hier durch die verstärkte Gurtkante auf die Bordscheiben der Trommel. Der Einsatzbereich dieses Zugträgers liegt vorrangig bei spezifisch leichten Gütern.

Alle drei Weiterbildungen benötigen gegenüber der Stahlkette keine Schmierstoffe im Bereich des Zugträgers und sind somit auch im Lebensmittelbereich, wie z.B. zur Getreideentladung, einsetzbar.

Der erfindungsgemäße Stetigentlader benötigt in vielen Fällen keine weiteren Hilfseinrichtungen. An sich ist es wie bei allen Senkrechtförderern möglich, dem Becherwerk einen Zuführkratzer vorzuschalten, falls Bereiche entladen werden müssen, die nicht direkt von dem Senkrechtförderer überstrichen werden können. Die Luken bei Seeschiffen sind beispielsweise erheblich schmäler als die Rumpfbreite. Anders ist es bei Binnenschiffen, wo mit der erfindungsgemäßen Vorrichtung meist auf aufwendige Zusatzeinrichtungen verzichtet werden kann, da bei einem Schubleichter die Lukenöffnung vergleichbar mit der Bodenfläche ist. Bekannte Geräte für die Binnenschiffsentladung brauchen wegen ihrer Schwere eine zusätzliche Stütze im Wasser, was von der Schiffahrt nicht gern gesehen wird. Bei der erfindungsgemäßen Vorrichtung sind solche Stützen nicht erforderlich.

Besonders bevorzugt ist gemäß der Erfindung ein Stetigentlader, bei dem am unteren Ende des Senkrechtförderers ein Schneidkopf vorhanden ist, dessen Schaufeln um die Vertikale rotieren und die nach innen hin so ausgebildet sind, daß nährungsweise ein halbkugelförmiger

0186772
K H D
H 84/68

freier Raum gebildet wird, in dem die Becher zur Gutaufnahme schöpfen. Mit dieser Einrichtung kann die verbleibende Restmenge noch stärker vermindert werden.

Gemäß einer Weiterbildung der Erfindung ist am unteren
Ende des Senkrechtförderers ein kegelmantelartig umlaufender Rechen zur Gutauflockerung angebracht, wobei die
Kegelachse vorzugsweise nicht senkrecht ist. Der Rechen
löst dabei eine Schicht von der Schnittkante ab, die dem
aufnehmenden Becherwerk entgegen rutscht.

Gemäß einer Weiterbildung der Erfindung sind am unteren
Ende des Senkrechtförderers Absaugvorrichtungen vorhanden. Es handelt sich dabei vorzugsweise um Saugdüsen zur
manuellen Restentladung und Reinigung im Schiff. Mit
fest angebauten Düsen solcher pneumatischen Fördereinrichtungen kann der Entladeführer im Schwenkverfahren
das Schiff auch von der Kanzel aus reinigen.

Die Erfindung ist in der Zeichnung dargestellt und im
folgenden beispielhaft beschrieben.

Es zeigen:

Fig. 1    Seitenansicht des Senkrechtförderers mit drei
          verschiedenen Becherformen;

Fig. 2    Vorderansicht des Senkrechtförderers mit drei
          verschiedenen Becherformen;

Fig. 3    Querschnitt durch den Senkrechtförderer;

Fig. 4    Becherform in drei Rissen;

Fig. 5    Becherform in drei Rissen;

0186772
K H D
H 84/68

Fig. 6    Becherform in drei Rissen;

Fig. 7    Becherform in drei Rissen;

Fig. 8    Vier verschiedene Ausführungen des Zuggliedes
in Seitenansicht;

Fig. 9    Vier verschiedene Ausführungen des Zuggliedes
im Querschnitt;

Fig. 10   Schneidkopf in Ansicht von unten;

Fig. 11   Schneidkopf in Seitenansicht;

Fig. 12   Rechen am unteren Ende des Senkrechtförderers
in Seitenansicht.

Der hier senkrecht eingesetzt Becherförderer besteht aus einem Fußteil 1, einem oder mehreren Mittelteilen 2 und dem Kopfteil 3. Die tragenden Teile sind aus Rohren 4 nach DIN 2458 mit Vorschweißflanschen 5 nach DIN 2632 aufgebaut. Zum Schutz der aufnehmenden Becher gegen Aufsetzen ist ein Schutzschild 6 vorgesehen. Von den Bechern des Becherwerkes sind schematisch jeweils ein Exemplar der drei verschiedenen Ausführungsformen 7 bis 9 dargestellt. Der Zugträger 10 wird von einem Elektromotor 11 angetrieben. Bei 12 erfolgt die Übergabe auf einen nährungsweise horizontalen Stetigförderer. Der Übergabepunkt 12 vom Senkrechtförderer zum quasi waagerechten Stetigförderer muß nicht drehbeweglich sein.

Mit dieser Vorrichtung kann das zu fördernde Gut 13 wie bei einer Halde schichtweise im Schwenkschnittverfahren abgetragen werden.

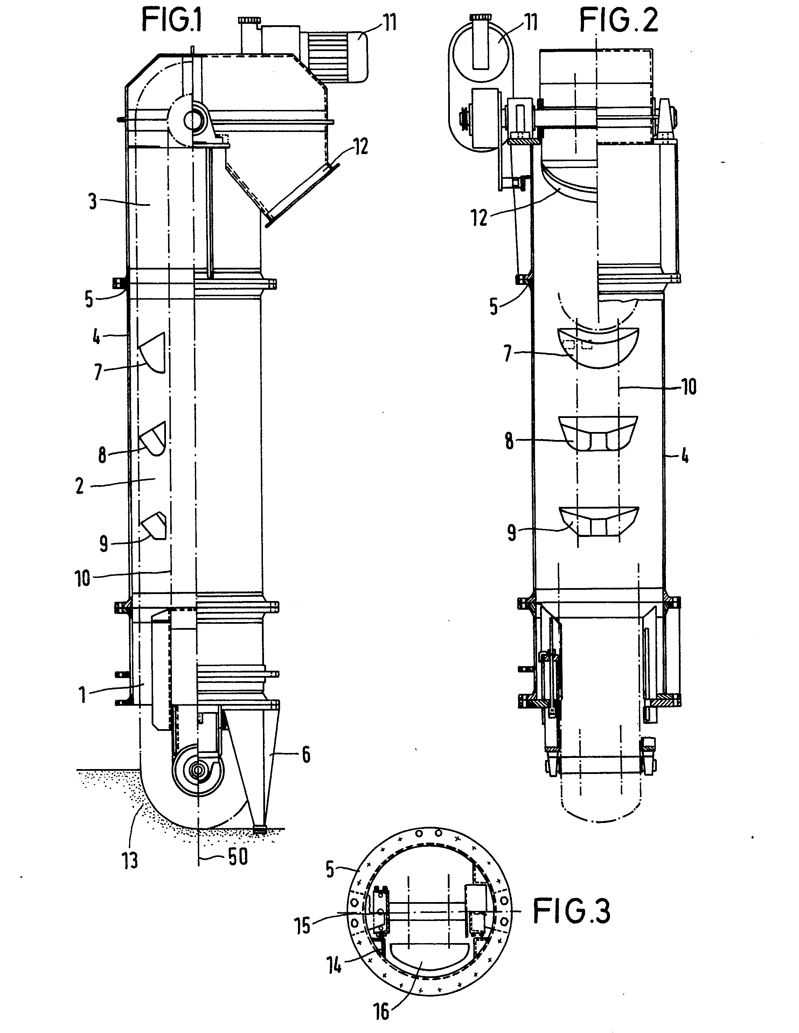

In der Vorderansicht in Fig. 2 sind ebenso wie in Fig. 1 drei verschiedene Becher 7 bis 9 als typische mögliche Ausführungen dargestellt.

Im Querschnitt des Förderers in Fig. 3 ist ein Flansch 5 sowie die Führung 14 der Umkehrachse 15 am Rohr 4 zu erkennen. Die in Draufsicht kreisabschnittähnliche Form eines Bechers 16 ermöglicht eine optimale Ausnutzung des Rohrquerschnitts.

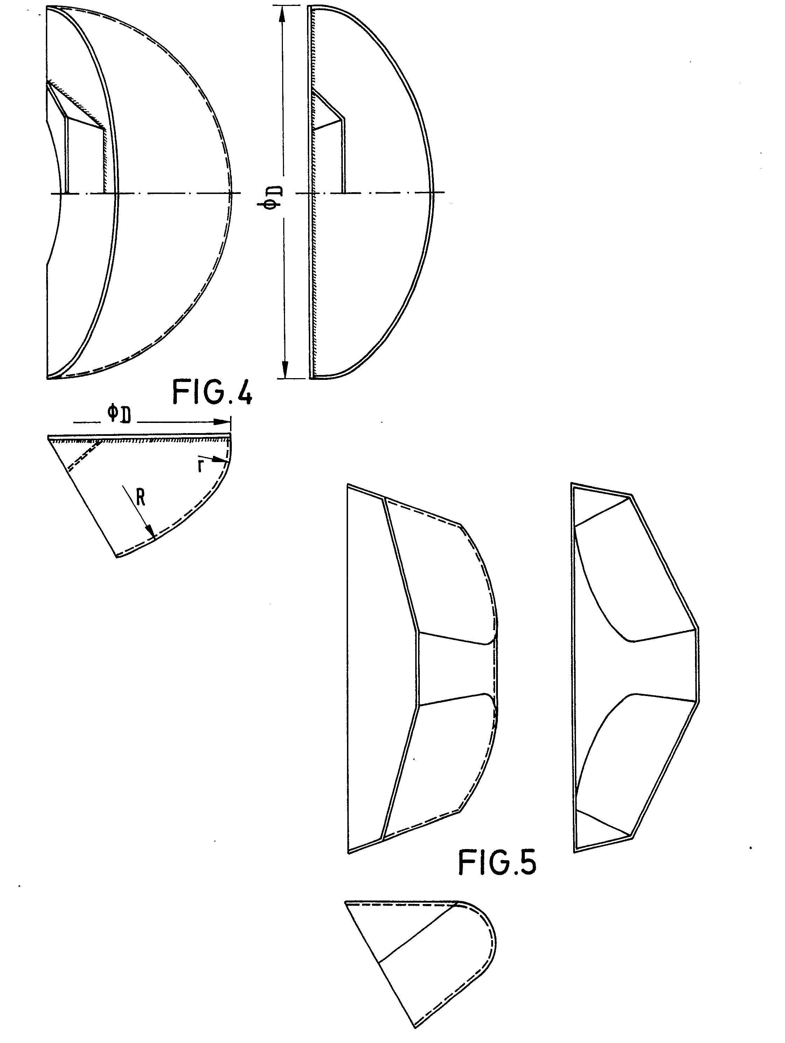

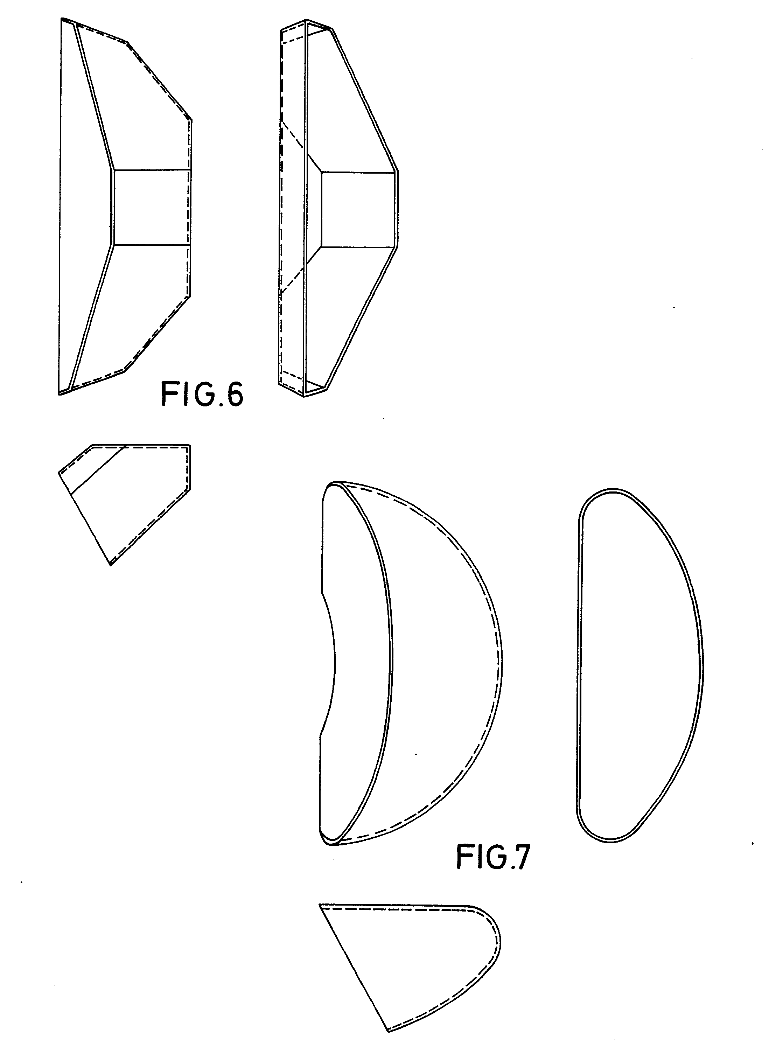

Bevorzugte Ausführungsformen der Becher sind in den Figuren 4 bis 7 jeweils in drei Rissen dargestellt. Der in der Beschreibung verwendete Oberbegriff "korbbogenbodenähnlich" ist hier weiter veranschaulicht. Es muß ein Freischnittwinkel nach allen Seiten vorhanden sein. In Fig. 4 ist beispielsweise R = 0,6 D und r = 0,154 D gewählt. Der Bechertyp gemäß Fig. 5 ist in seiner Seitenansicht als DIN-Becher bekannt. Weitere Angaben über verwendbare Böden können beispielsweise dem Afflerbach-Handbuch "Böden und Verschlüsse", Ausgabe 1980, entnommen werden.

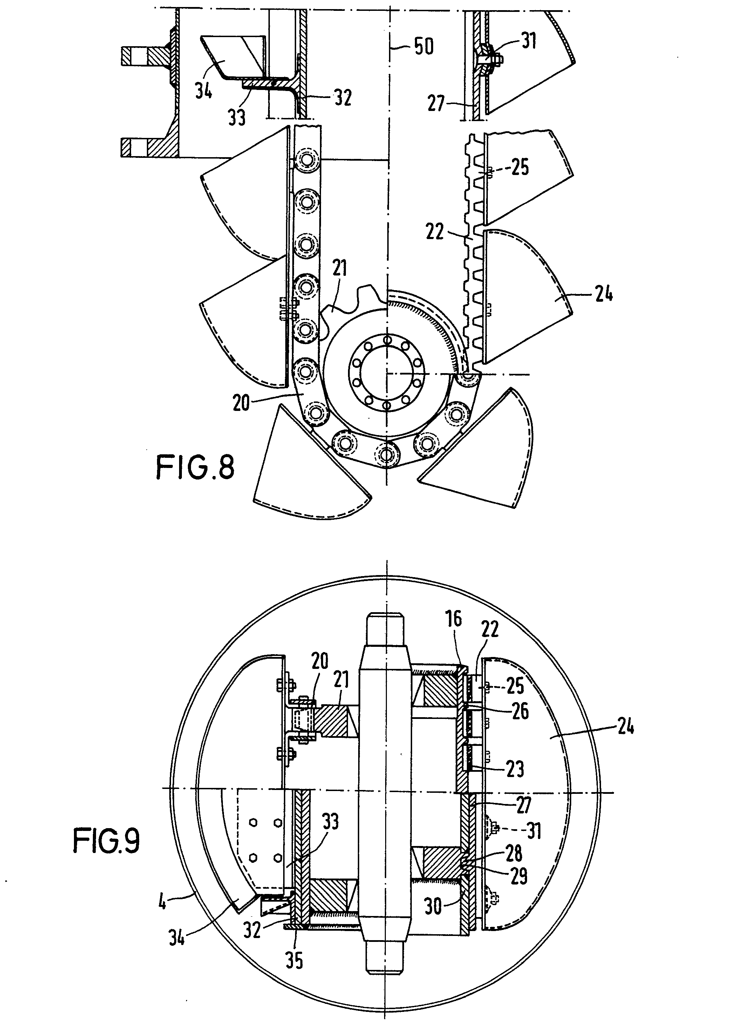

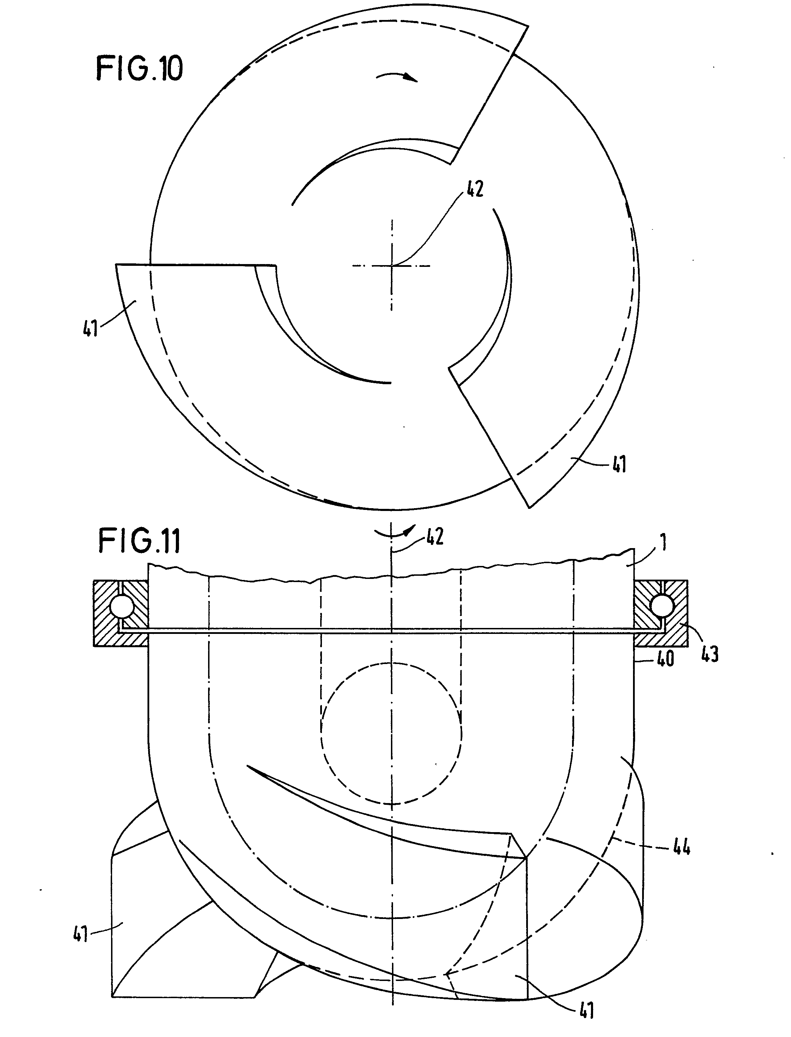

Da auf den Becher gemäß der Erfindung allseitig Kräfte einwirken können, müssen die Zugglieder des Stetigförderers an diese Belastung angepaßt werden. Bekannt ist der Einsatz einer Stahlkette. Die erfindungsgemäße Vorrichtung kann jedoch auch mit anderen Zugträgern ausgeführt werden. In den Figuren 8 und 9 sind vier bevorzugte Ausführungsformen nebeneinander dargestellt. Nachteilig bei der bekannten Buchsenförderkette 20, deren seitliche Führung durch die Verzahnung in den Kettenrädern 21 erfolgt, (dargestellt im linken unteren Bereich in Fig. 8 bzw. im linken oberen Quadranten der Fig. 9) ist der hohe Geräuschpegel und die erforderliche Schmierung. Die anderen drei Ausführungsarten sind in diesen Punkten günstiger.

0186772
K H D
H 84/68

Beim Einsatz einer Gummikette 22 (dargestellt im rechten unteren Bereich der Fig. 8 und im rechten oberen Quadranten in Fig. 9) ist eine Verstärkung mittels Stahlseilen 23 erforderlich. In diesem Beispiel sind 6 Gummiketten 22 mit je 5 Stahlseilen 23 vorhanden. Die Befestigung der Becher 24 erfolgt an einvulkanisierten Befestigungselementen 25. Die seitliche Führung der Gummiketten 22 wird durch Führungsborde 26 an Einzelrädern oder an einer Trommel 16 gewährleistet.

Auch Becherwerksgurte 27 mit aufvulkanisierten Längsprofilen 28 (dargestellt im rechten oberen Bereich der Fig. 8 und im rechten unteren Quadranten der Fig. 9) sind geeignet. Die Übertragung geschieht durch die Führung der Längsprofile 28 in Rillen 29 der Trommel 30. Die Befestigung 31 der Becher erfolgt hier mit Normteilen am Becherwerksgurt 27.

Ein Wellkantengurt 32 mit Stollen 33 und an diesem befestigten Blechschneiden 34 als Zugträger ist im linken oberen Bereich der Fig. 8 und im linken unteren Quadranten der Fig. 9 dargestellt. Beim Wellkantengurt werden die seitlichen Kräfte von den verstärkten Gurtkanten auf Trommelborde 35 übertragen.

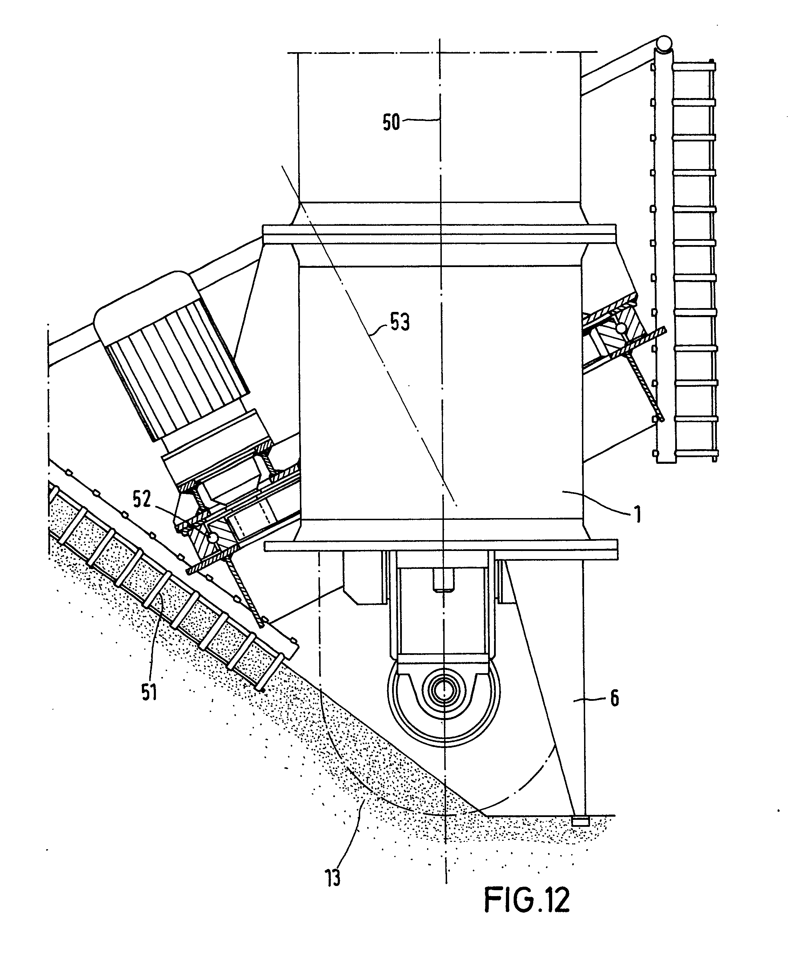

Zur möglichst vollständigen Entladung ist ein Schneidkopf gemäß der Fig. 10 und 11 besonders geeignet. An einem drehbaren zylindrischen Teil 40 sind drei trichterartig abstehende Einlässe 41 vorhanden. Der Antrieb für die Drehachse 42 ist nicht gezeichnet. Sie fällt mit der Achse des Senkrechtförderers zusammen. Das rohrartige Teil 40 ist über eine Kugeldreh-Verbindung 43 mit dem Rohrteil 1 verbunden. Strichliert ist skizziert (gekennzeichnet durch das Bezugszeichen 44), daß die Einlässe 41 nach innen so ausgebildet sind, daß nährungsweise ein halbkugelförmig freier Raum entsteht, in dem die Becher zur Gutaufnahme schöpfen können.

Eine andere Zusatzeinrichtung in Verbindung mit dem Stetigförderer ist in Fig. 12 dargestellt. Der Stetigförderer hat hier auch einen nicht unbedingt benötigten Schutzschild 6, der auf dem Gut 13 aufsetzt und eine Berührung der Becher mit dem Boden (z.B. Schiffsboden) verhindern soll. Ein zur Achse 50 geneigter, kegelmantelartig umlaufender Rechen 51 ist mittels einer Kugeldrehverbindung 52 am Unterteil 1 des Stetigförderers befestigt. Diese Vorrichtung verbessert die Gutaufnahme, weil sie das Fördergut losbricht, lockert und zum Abrieseln bringt, so daß höhere Schichten abgetragen werden können.

K 0186772
H 84/68

Patentansprüche

1. Stetigentlader, enthaltend als Steilförderer Becher an einem Zugträger, dadurch gekennzeichnet, daß die Becher (7, 8, 9, 16, 24) korbbogenbodenartig ausgebildet sind, die neben einem vorderen auch einen seitlichen Freischnittwinkel haben und der Zugträger (10) seitliche Kräfte aufnehmen und übertragen kann.

2. Stetigentlader nach Anspruch 1, dadurch gekennzeichnet, daß die Becher (16, 24) in Aufsicht kreisabschnittähnlich sind.

3. Stetigentlader nach Anspruch 1 oder 2, dadurch gekennzeichnet, daß die Becher (7, 8, 9) in Voransicht kreisabschnittähnlich sind.

4. Stetigentlader nach Anspruch 1, dadurch gekennzeichnet, daß die Becher (7, 8, 9, 16, 24) aus Teilen eines Klöpperbodens, Korbbogenbodens, Halbkugelbodens, normal- oder flachgewölbten Bodens, flachen Bodens, Tellerbodens, einer gewölbten Scheibe oder Mischformen aufgebaut sind oder sich aus abgekanteten und zusammengeschweißten Blechen, die diesen Formen angepaßt sind, zusammensetzen.

5. Stetigentlader nach den Ansprüchen 1 bis 4, dadurch gekennzeichnet, daß der Stetigförderer von einem Rohr (4) umgeben ist.

0186772
K H D
H 84/68

6. Stetigförderer nach den Ansprüchen 1 bis 5, <u>dadurch gekennzeichnet</u>, daß der Zugträger (10) als ein- - oder mehrsträngige Gummikette (22) mit einvulkanisierten Befestigungselementen (25) und Stahlseilen (23) ausgeführt ist.

7. Stetigförderer nach den Ansprüchen 1 bis 5, <u>dadurch gekennzeichnet</u>, daß der Zugträger (10) als Becherwerksgurt (27) mit Längsprofilen (28) ausgeführt ist.

8. Stetigförderer nach den Ansprüchen 1 bis 5, <u>dadurch gekennzeichnet</u>, daß der Zugträger (10) als Wellkantengurt (32) ausgebildet ist.

9. Stetigförderer nach den Ansprüchen 1 bis 8, <u>dadurch gekennzeichnet</u>, daß am unteren Ende des Steilförderers ein Schneidkopf vorhanden ist, dessen Schaufeln um die Vertikale (42) rotieren und die nach innen hin so ausgebildet sind, daß nährungsweise ein halbkugelförmiger freier Raum (44) gebildet wird, in dem die Becher zur Gutaufnahme schöpfen.

10. Stetigentlader nach einem der Ansprüche 1 bis 9, <u>dadurch gekennzeichnet</u>, daß am unteren Ende des Steilförderers ein kegelmantelartig umlaufender Rechen (51) zur Gutauflokkerung angebracht ist, wobei die Kegelachse (53) vorzugsweise nicht senkrecht ist.

11. Stetigentlader nach einem der Ansprüche 1 bis 10, <u>dadurch gekennzeichnet</u>, daß am unteren Ende des Steilförderers Absaugvorrichtungen vorhanden sind.

FIG.1

FIG.2

FIG.3

0186772

$\phi D$

FIG.4

$\phi D$

r

R

FIG.5

0186772

FIG.6

FIG.7

FIG.8

FIG.9

FIG.10

FIG.11

FIG.12

0186772

Nummer der Anmeldung

## EINSCHLÄGIGE DOKUMENTE

EP 85114808.0

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| Y | AT - B - 320 521 (M.-U.-T.)<br>* Seite 2, Zeilen 25-28,34-35 *<br>-- | 1,2,5 | B 65 G 17/36<br>B 65 G 17/12 |
| Y | US - A - 3 861 518 (DIBBEN)<br>* Spalte 1, Zeilen 49-51 *<br>-- | 1,6 | |
| A | DE - A - 2 061 492 (BÜHLER)<br>* Fig. 1,4 *<br>---- | 1,4 | |

RECHERCHIERTE
SACHGEBIETE (Int. Cl.4)

B 65 G

Der vorliegende Recherchenbericht wurde für alle Patentansprüche erstellt.

| Recherchenort | Abschlußdatum der Recherche | Prüfer |
|---|---|---|
| WIEN | 18-03-1986 | BAUMGARTNER |